# EUROPÄISCHE PATENTANMELDUNG

(11) **EP 3 712 120 A1**
(43) Veröffentlichungstag der Anmeldung: **23.09.2020**
(21) Anmeldenummer: 20174028.9
(22) Anmeldetag: 09.11.2017
(51) Int. Cl.: C04B 35/10, C04B 35/101, C04B 35/443, C04B 35/626, C04B 35/653, C04B 35/66, C23C 28/00, F01D 5/28

(54) **EROSIONSBESTÄNDIGER KERAMISCHER WERKSTOFF, PULVER, SCHLICKER UND BAUTEIL**

(30) Priorität: 08.12.2016 DE 102016224443
(62) Teilanmeldung aus: 17807734.3
(71) Anmelder: Siemens Aktiengesellschaft, 80333 München (DE)
(72) Erfinder: Krausz, Ivo, 12247 Berlin (DE); Lange, Friederike, 40885 Ratingen-Lintorf (DE); Nikasch, Christian, 45478 Mülheim an der Ruhr (DE)
(74) Vertreter: Maier, Daniel Oliver

(57) **Zusammenfassung**

Durch die Verwendung von Magnesiumoxid, reaktiver Tonerde und Aluminiumoxid als Basis wird bei der Sinterung ein neuer erosionsbeständiger Werkstoff zur Verfügung gestellt.

## Beschreibung

Die Erfindung betrifft einen erosionsbeständigen keramischen Werkstoff, ein Pulver, Schlicker und ein Bauteil.

Keramische Hitzeschilde (CHS) als Beispiel für Bauteile aus dem Werkstoff Keramik zeigen während des Betriebseinsatzes Korrosion und Erosion auf der Heißgasseite. Dieser Prozess geht auf die Korrosion des im CHS-Material enthaltenen Mullits zurück, der im Kontakt mit dem Heißgas zu sekundärem Korund umgewandelt wird. Dieser sekundäre Korund wiederum hat eine geringere mechanische Festigkeit als das umgebende CHS-Material. Dieser sekundäre Korund wird vom Heißgasstrom abgetragen und dabei werden die größeren Gefügebestandteile des Bauteils aus der Keramik freigelegt. Sind diese Gefügebestandteile zu einem gewissen Grad freigelegt, werden diese aus der CHS-Oberfläche herausgelöst.

Die keramischen Hitzeschilde CHS in den am meisten von Korrosion und Erosion betroffenen CHS-Reihen der Brennkammer erhalten oft eine Aluminiumoxid-Beschichtung auf der Heißgasseite. Dieses Coating wird durch ein Schlicker-Spray-Verfahren oder ein Flammspritzverfahren auf den CHS aufgetragen.

Diese Beschichtungen bestehen oft aus einer relativ feinkörnigen Struktur, die im Anlagenbetrieb zum Nachsintern, Rissbildung und frühzeitigem Absanden neigt.
Ein Flammcoating hingegen ist relativ dicht, spröde und kann den Deformationen des CHS im Anlagenbetrieb nicht folgen. Die Folge sind auch hier Rissbildungen im Coating und Ablösen der Coatingbestandteile, auch aufgrund der relativ schlechten Anbindung des Flammcoatings am CHS-Basismaterial. Die Lebensdauer dieser Beschichtungen ist relativ begrenzt. Der Schutz des CHS-Basismaterials vor Heißgaskorrosion ist damit zeitlich deutlich begrenzt. Das abgelöste Coating selbst stellt hingegen eine zusätzliche Partikelquelle dar, die in Richtung Turbine beschleunigt werden und dort Schäden an der Turbinenschaufel-TBC anrichten können.

Es ist daher Aufgabe der Erfindung oben genanntes Problem zu lösen.

Die Aufgabe wird gelöst durch ein Pulver gemäß Anspruch 1, eine Keramik gemäß Anspruch 10, einem Schlicker nach Anspruch 15 und einem Bauteil gemäß Anspruch 16.

Die Keramik weist zumindest auf (in Gew.-%): insbesondere besteht aus Aluminiumoxid als Matrixmaterial, insbesondere 92,0% bis < 99,0%, und Mullite, insbesondere mit einem Anteil von 8,0% - 1,0%.

Keramik bedeutet hier allgemein den Gattungsbegriff und jede Darstellung als Rohling, Grünkörper, Pulver, Schlicker, Endprodukt, massiv oder als Schicht.

Dabei wird vorzugsweise für Aluminiumoxid Korund oder Tabulartonerden verwendet.

Die Keramik enthält als Aluminiumoxid vorzugsweise Reaktivtonerde zur Reduzierung des Wassergehalts und zur Verbesserung der Verarbeitungsfähigkeit in einem Keramikschlicker vorhanden ist.

Vorzugsweise sind kein Siliziumoxid und/oder keine Siliziumverbindungen in der Keramik oder Pulver vorhanden.

Das Pulver weist zumindest aufweisend reaktives Magnesiumoxid (MgO) mit 0,1% bis 4,0% zur Bildung von Mullite mit dem vorhandenen Aluminiumoxid und 96,0% bis 99,9% Aluminiumoxid auf.

Das Pulver enthält vorzugsweise γ'-Aluminiumoxid oder Korund oder Tabulartonerden als Aluminiumoxid oder Reaktivtonerde als Alumminiumoxid enthält, als Zusätze zur Reduzierung des Wassergehalts und zur Verbesserung der Verarbeitungsfähigkeit in einem Keramikschlicker, insbesondere mit einem Anteil von 10 Gew.-% bis 25 Gew.-%.

Die Tabulartonerde weist vorzugsweise mindestens drei verschiedene Körnungen auf und bei dem die Tabulartonerden eine maximale Korngröße bis 10mm aufweisen.

Die Reaktivtonerde weist vorzugsweise mindestens zwei verschiedene Körnungen auf.

Körnung bedeutet hier eine Pulverfraktion mit einer Gauß- oder Maxwell- oder ähnlicher Verteilung. Verschiedene Körnung bedeutet, dass sich die Korngrößenverteilung deutlich unterscheiden.

Das reaktive Magnesiumoxid (MgO) weist vorzugsweise Zitronensäureaktivität von 10 Sekunden bis 250 Sekunden auf.

Der Schlicker weist zumindest eine Flüssigkeit, insbesondere Wasser, und ein Pulver wie oben beschrieben auf.

Aus der Keramik, dem Pulver oder dem Schlicker wird ein Bauteil hergestellt.

Mullit als korrosionsanfälliger Anteil in dem Werkstoff für keramische Hitzeschilde wird insbesondere vollständig bei dem neuen Werkstoff vermieden. Der verbliebene Korund im derzeitigen Werkstoff ist deutlich heißgasstabiler. Die bisher beobachtete Korrosion des Mullits und die damit verbundenen Bildung von mechanisch instabilem sekundärem Korund entfällt dadurch. Der Materialabtrag dieser Keramik wird dadurch auf die weitaus geringere Korrosion und Erosion des Korunds reduziert.

In der Keramik wird durch den Zusatz einer geringen Menge von reaktiven MgO (0,1 Gew.-% bis 4,0 Gew.-%) die Bildung einer alternativen Bindephase erreicht. Dieses reaktive MgO fungiert bei der Herstellung eines Bauteils aus der Keramik durch die Bildung von Mg(OH)₂ als temporärere Binder.
Beim Brennprozess reagiert Magnesiumoxid, das durch Mg(OH)₂ zur Verfügung steht mit feinkörnigem Aluminiumoxid aus dem übrigen Versatz unter Bildung von Spinell. Diese Spinellbindung (MgAl₂O₄) ersetzt die bisherige Mullitbindung im fertigen Bauteil. Durch die Spinellbildung wird wieder ein ZweiPhasen-System (Korund und Spinell) erreicht. Diese Zweiphasensysteme zeichnen sich durch die geringfügig unterschiedlichen thermischen Ausdehnungskoeffizienten der einzelnen Phasen und den dadurch verursachten Mikrorisse im Gefüge durch eine verbesserte Temperaturwechselbeständigkeit aus.
Für die Keramik wird reaktive Tonerde zur Reduzierung des Wassergehalts und zur Verbesserung der Verarbeitungsfähigkeit eingesetzt. Ein weiterer positiver Effekt durch diese reaktive Tonerde besteht in der damit erreichten sehr feinkörnigen Porenverteilung in der Keramikstruktur. Während die Gesamtporosität in einem Bauteil aus der Keramik in etwa auf dem gleichen Niveau liegt wie bei anderen Keramik-Werkstoffen ist der typische durchschnittliche Porendurchmesser hier mit < 5µm deutlich keiner als bei anderen gegossenen CHS-Materialien (typischerweise 5µm bis 20µm). Diese feine Porosität begünstigt ebenfalls das Thermoschockverhalten der Keramik als massives Bauteil. Diese reaktive Tonerde wird vorzugsweise in einem Anteil von 10 Gew.-% bis 25 Gew.-% am Gesamtversatz eingesetzt.

Die übrigen Rohstoffe des Pulvers bestehen aus Tabulartonerden diverser Körnungen bis zu einer maximalen Korngröße von bis zu 10,0mm. Die Korngrößenverteilung (= 1 Körnung) von reaktiven Tonerde, Binder (reaktives MgO) und sonstigen Versatzbestandteilen (Tabulartonerden) ist so aufeinander abgestimmt, dass einerseits eine ausreichende Fließfähigkeit und damit Verarbeitungsfähigkeit bei der Herstellung des Materials erreicht wird, andererseits aber auch die benötigte Festigkeit und Thermoschockbeständigkeit des Werkstoffs für den Betrieb in einer Gasturbine erfüllt wird.

Die Keramik ist mangels Mullitanteil deutlich heißgasstabiler und damit unempfindlicher gegenüber Korrosion und Erosion als alle anderen gegenwärtig verwendeten CHS-Werkstoffe.

Die Porosität eines Bauteils aus der Keramik oder aus dem Pulver wird durch den Einsatz einer Dispergiertonerde zu deutlich mehr und feineren Poren hin optimiert, wodurch sich die Thermoschockbeständigkeit deutlich verbessert.

Der Einsatz von reaktivem MgO fungiert bei der Herstellung der CHS als temporäre Bindephase. Dadurch kann auf den Gebrauch von anderen Bindern verzichtet werden, die im späteren Fertigprodukt zu negativen Begleiterscheinungen führen könnten.

Das reaktive MgO bildet beim Brand der Keramik eine dauerhafte und heißgasstabile Spinellphase aus. Diese Spinellphase bildet in der feinkörnigen Matrix die dauerhafte Bindung zwischen den gröberen Versatzbestandteilen.

Korund erreicht dank seiner Spinellbindung, der feinverteilen Porosität und dem übrigen Gefügeaufbau als einziges bisher bekanntes Feuerfestmaterial ohne Mullitanteil eine ausreichende Thermoschockbeständigkeit, um auch nach einer Standardprüfserie auf einem Hot-HCF-Prüfstand (Simulation der thermischen und mechanischen Belastungen für ein CHS während des Anlagenbetriebs) auf die geforderten Festigkeitswerte zu erreichen.

Durch die verringerte Korrosion und Erosion von CHS aus Korund gegenüber CHS aus anderen CHS-Werkstoffen verlängert sich deren Lebensdauer in erosionsgefährdeten Bereichen der Brennkammer deutlich.

Die Tauschrate der keramischen Hitzeschilde aufgrund von Materialabtrag sinkt beträchtlich, die Lebensdauer der CHS steigt.

Die Zeiten für den benötigen CHS-Tausch in diesen CHS-Reihen nimmt damit ab, wodurch sich auch die Outage Time für die gesamte Anlage verkürzen kann.

Durch den deutlich reduzierten Materialabtrag von der CHS-Oberfläche werden auch weniger Partikel in Richtung Turbine getragen, die dort erosiv auf die Turbinenschaufelbeschichtung einwirken können. Damit verlängert sich die Lebensdauer der Turbinenschaufel-TBC signifikant. Deutlich längere Betriebszeiten für Turbinenschaufeln werden ermöglicht.

Der Werkstoff ist für alle Anwendungen geeignet, bei denen ein feuerfestes Material einer Thermoschockbeanspruchung ausgesetzt ist und zusätzlich einem Heißgaskorrosionsangriff widerstehen muss.

## Patentansprüche

1. Pulver,
zumindest aufweisend (in Gew.-%),
insbesondere bestehend aus:
96,0% bis 99,9% Aluminiumoxid,
reaktives Magnesiumoxid (MgO),
insbesondere 0,1% bis 4,0%,
zur Bildung von Mullite mit dem vorhandenen Aluminiumoxid.

2. Pulver nach Anspruch 1,
das γ'-Aluminiumoxid enthält.

3. Pulver nach einem oder beiden der Ansprüche 1 oder 2,
das Korund als Aluminiumoxid enthält.

4. Pulver nach einem oder mehreren der Ansprüche 1 bis 3,
das Tabulartonerden als Aluminiumoxid enthält.

5. Pulver nach einem oder mehreren der Ansprüche 1 bis 4,
das Reaktivtonerde als Alumminiumoxid enthält,
als Zusatz zur Reduzierung des Wassergehalts und zur Verbesserung der Verarbeitungsfähigkeit in einem Keramikschlicker,
insbesondere mit einem Anteil von 10 Gew.-% bis 25 Gew.-%.

6. Pulver nach Anspruch 4 oder 5,
bei dem die Tabulartonerde mindestens drei verschiedene Körnungen aufweist.

7. Pulver nach Anspruch 5 oder 6,
bei dem die Reaktivtonerde mindestens zwei verschiedene Körnungen aufweist.

8. Pulver nach einem oder mehreren der Ansprüche 4 bis 7,
bei dem die Tabulartonerden eine maximale Korngröße bis 10mm aufweisen.

9. Pulver nach einem oder mehreren der vorherigen Ansprüche 1, 3, 4, 5, 6, 7 oder 8,
bei dem das reaktive Magnesiumoxid (MgO) eine Zitronensäureaktivität von 10 Sekunden bis 250 Sekunden aufweist.

10. Keramik,
insbesondere hergestellt mit einem Pulver nach einem oder mehreren der Ansprüche 1 bis 9,
zumindest aufweisend (in Gew.-%),
insbesondere bestehend aus:
Aluminiumoxid als Matrixmaterial,
insbesondere 92,0% bis < 99,0%,
und Mullite,
insbesondere mit einem Anteil von 8,0% - 1,0%.

11. Keramik nach Anspruch 10,
bei dem Aluminiumoxid als Korund vorhanden ist.

12. Keramik nach Anspruch 10 oder 11,
bei dem Aluminiumoxid als Tabulartonerden vorhanden ist.

13. Keramik nach einem oder mehreren der Ansprüche 10, 11 oder 12,
bei dem Aluminiumoxid als Reaktivtonerde zur Reduzierung des Wassergehalts und zur Verbesserung der Verarbeitungsfähigkeit in einem Keramikschlicker vorhanden ist.

14. Pulver oder Keramik nach einem oder mehreren der Ansprüche 1 bis 13,
die kein Siliziumoxid und/oder keine Siliziumverbindungen aufweist.

15. Schlicker,
zumindest aufweisend eine Flüssigkeit,
insbesondere Wasser,
und ein Pulver nach einem oder mehreren der Ansprüche 1 bis 9 oder 14.

16. Bauteil
aufweisend, insbesondere bestehend aus einer Keramik gemäß einem oder mehreren der Ansprüche 10, 11, 12, 13 oder 14 oder
hergestellt aus einem Pulver gemäß einem oder mehreren der Ansprüche 1 bis 9 oder 14 oder
einem Schlicker gemäß Anspruch 15.

17. Bauteil nach Anspruch 16,
bei dem 90% aller Poren kleiner 5µm sind,
insbesondere 95%.

18. Bauteil nach Anspruch 16 oder 17,
aufweisend Aluminiumoxid und Mullite,
insbesondere bestehend daraus.
